(19) Europäisches Patentamt
European Patent Office
Office européen des brevets

(11) **EP 4 089 394 A1**

(12) **EUROPEAN PATENT APPLICATION**

(43) Date of publication:
**16.11.2022  Bulletin 2022/46**

(21) Application number: **21173427.2**

(22) Date of filing: **11.05.2021**

(51) International Patent Classification (IPC):
**G01N 15/14** (2006.01)     **G01N 15/00** (2006.01)
**G01N 15/10** (2006.01)     **B01L 3/00** (2006.01)

(52) Cooperative Patent Classification (CPC):
**G01N 15/1434; B01L 3/502715; B01L 3/502761;**
**G01N 15/1475; G01N 15/1484;** B01L 2200/0652;
B01L 2300/0645; B01L 2300/0663;
B01L 2300/0816; B01L 2300/0864;
B01L 2400/0424; B01L 2400/0487;
G01N 2015/1006; G01N 2015/1452

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Ceidos SA**
**1950 Sion (CH)**

(72) Inventors:
• **BARRAS, Léonard**
  **1950 SION (CH)**
• **WALPEN, Sébastien**
  **1950 SION (CH)**

(74) Representative: **reuteler & cie SA**
**Chemin de la Vuarpillière 29**
**1260 Nyon (CH)**

(54) **CELL CULTURE MONITORING SYSTEM**

(57)    A cell culture monitoring system (1) comprising a monitoring apparatus (3) for coupling to a culture tank (2) containing a cell culture medium (15) therein, and a fluid circulation system (4) for fluidic coupling to the cell culture tank (2) the fluid circulation system comprising a dielectrophoresis cartridge (5) for connection to the cell culture tank (2) via supply and return conduits (14a), (14b), the dielectrophoresis cartridge comprising a base (20) and an electrode support (19) having electrodes (21) in or on the electrode support (19), the electrodes configured for travelling wave dielectrophoresis and comprising a measurement zone (21a) arranged above a measuring chamber (23b) formed between the electrode support (19) and a floor (26) of the base (20) forming a measuring chamber therebetween, whereby cells in a liquid medium flowing through the measuring chamber are subject to a travelling wave dielectrophoresis force orthogonal to a direction of flow of said liquid through said measuring chamber (23b), the monitoring apparatus (3) comprising a computing unit (9), an image capture system (7) connected to the computing unit (9), and a cartridge holder portion (28) for receiving said dielectrophoresis cartridge (5) such that the image capture system (7) may detect cells flowing through said measuring chamber (23b).

FIG 1

**Description**

The present invention relates to a system for monitoring the culture of cells in a liquid medium.

The emergence of cell therapies and cell based product is leading to an increased need for accurate and timely control of cell cultures. Cell cultures may also be used for bioproduction for instance of antibodies and vaccines. Many steps of conventional culture processes need human intervention, in particular for cell counting and cell viability measurement. Each intervention increases the risk of contamination and the final cost of the therapy. The loss of a therapy batch due to error or contamination has dramatic consequences for the patient.

In view of the foregoing, an object of the invention is to provide a cell culture monitoring system that allows for accurate control of cell growth and reduces the risk of contamination in an economical manner.

It is advantageous to provide a cell culture monitoring system that is reliable.

It is advantageous to provide a cell culture monitoring system that allows continuous or frequent analyses of the state of cells during culture in an economical and sterile manner. Continuous measurements of viability would allow to detect cell culture disease at an early stage.

Objects of the invention have been achieved by providing a cell culture monitoring system according to claim 1.

Disclosed herein is a cell culture monitoring system comprising a monitoring apparatus for coupling to a culture tank containing a cell culture medium therein, and a fluid circulation system for fluidic coupling to the cell culture tank. The fluid circulation system comprises a dielectrophoresis cartridge for connection to the cell culture tank via supply and return conduits, the dielectrophoresis cartridge comprising a base and an electrode support having electrodes arranged in an electrode plane *X-Y* in or on the electrode support, the electrodes configured for travelling wave dielectrophoresis and comprising a measurement zone arranged above a measuring chamber formed between the electrode support and a floor of the base fillable with cell culture medium from the cell culture tank. The monitoring apparatus comprises a signal generator connected to the electrodes, a computing unit, an image capture system connected to the computing unit, and a cartridge holder portion for receiving said dielectrophoresis cartridge such that the image capture system may detect cells in said measuring chamber.

In a first aspect of the invention, the image capture system is configured to capture the displacement of cells in the cell culture medium within the measuring chamber in an orthogonal direction *Z* to said electrode plane *X-Y* to enable measurement of a cell type and/or cell state.

In a second aspect of the invention, the electrodes are insulated with respect to an inside of the measuring chamber by an insulator layer, except for a measurement zone where the electrodes are in non-insulated contact with the inside of the measuring chamber.

In an advantageous embodiment, the image capture system and computing unit is configured to capture multiple images in slices taken in the orthogonal direction *Z* that are processed to determine the position and displacement of cells in the orthogonal direction *Z.*

In an advantageous embodiment, the image capture system comprises a microscope with a depth of field less than a height of the measuring chamber and an electrically adjustable lens for adjustment of the focus to capture slices of image at different heights.

In an advantageous embodiment, cells in the cell culture liquid medium within the measuring chamber are subject to a travelling wave dielectrophoresis force in a plane parallel to the electrode plane *X-Y* and wherein the image capture system is configured to capture the displacement of cells in the cell culture medium within the measuring chamber in said plane parallel to the electrode plane *X-Y* to enable measurement of a cell type and/or cell state in conjunction with the measurement based on displacement of the cell in the orthogonal direction *Z.*

In an advantageous embodiment, the signal generator is configured to scan through different electrode signal frequencies, or apply a plurality of discrete different electrode signal frequencies, during a measurement or over a succession of measurements, and the image capture system and computing unit are configured to measure displacements of a cell for different electrode signal frequencies.

In an advantageous embodiment, the electrode support is made of a transparent polymer or glass, and the electrodes at least in the measurement zone may be made of a conductive transparent material, for instance a thin indium tin oxide (ITO) layer. Contact areas of the electrodes may however preferably comprise a gold layer or other conductive material resistant to corrosion to ensure a good electrical contact with the connector.

In variants it is however possible to have electrodes in gold or other non-transparent conductive materials including within the measurement zone, whereby the non-transparent electrode lines may be accounted for or filtered out of the image acquisition of the cell chamber by image processing algorithms, the spaces between electrodes allowing the position and displacement of cells to be measured.

In an advantageous embodiment, the cartridge comprises at least two impedance measurement electrodes configured for measuring the impedance (Zi) of a cell. The impedance measurement electrodes may be two of the electrodes used for travelling wave dielectrophoresis, or may be independent electrodes used only for the impedance measurement.

In an advantageous embodiment, the dielectrophoresis cartridge comprises an outlet and an inlet configured for coupling to tubes of a supple polymer forming said supply and return conduits.

In an advantageous embodiment, the electrodes are formed on an inner surface of the electrode support bounding the measuring chamber and having contact portions extending to an electrode connection window formed in the base for plugging contact to complementary spring contacts of the monitoring apparatus, the electrode connection window being sealingly separated from the measuring chamber.

In an advantageous embodiment, the measuring chamber comprises a raised floor and lateral guides defining a gap between the floor and electrode support.

In an advantageous embodiment, said electrodes comprise a measurement zone formed by one or more spiraling conductive tracks.

In an advantageous embodiment, said electrodes consist of four to ten electrodes, preferably four to eight electrodes.

In an advantageous embodiment, the electrodes are arranged in the measurement zone in two sets in mirror image symmetry.

In an alternative embodiment the electrodes comprise at least two interdigitated electrodes.

In an advantageous embodiment, the cartridge holder portion of the monitoring apparatus comprises a cartridge holder slot configured for slidable insertion of the dielectrophoresis cartridge therein.

In an advantageous embodiment, the cartridge holder portion comprises locating elements engaging in complementary locating elements in the dielectrophoresis cartridge for positioning and securing the dielectrophoresis cartridge in a measurement position.

In an advantageous embodiment, the locating elements comprise spring protuberances or spring resist portions on either the cartridge holder portion or the dielectrophoresis cartridge.

In an advantageous embodiment, the image capture system comprises a microscope connected to an image processing circuit of the computing unit configured for digital analysis of the trajectory of the cells captured by the image capture system.

In an advantageous embodiment, the computing unit comprises a signal generator connected via the connector to the electrodes of the dielectrophoresis cartridge configured to generate a travelling wave dielectrophoresis signal in the measurement zone of the electrodes.

In an advantageous embodiment, the measuring chamber between electrode and floor is in the range of 10 to 500μm.

In an advantageous embodiment, the cell culture tank is separate from the monitoring apparatus and comprises a fluidic connector for connection to supply and return conduits connected to the dielectrophoresis cartridge.

Further objects and advantageous features of the invention will be apparent from the claims, from the detailed description, and annexed drawings, in which:

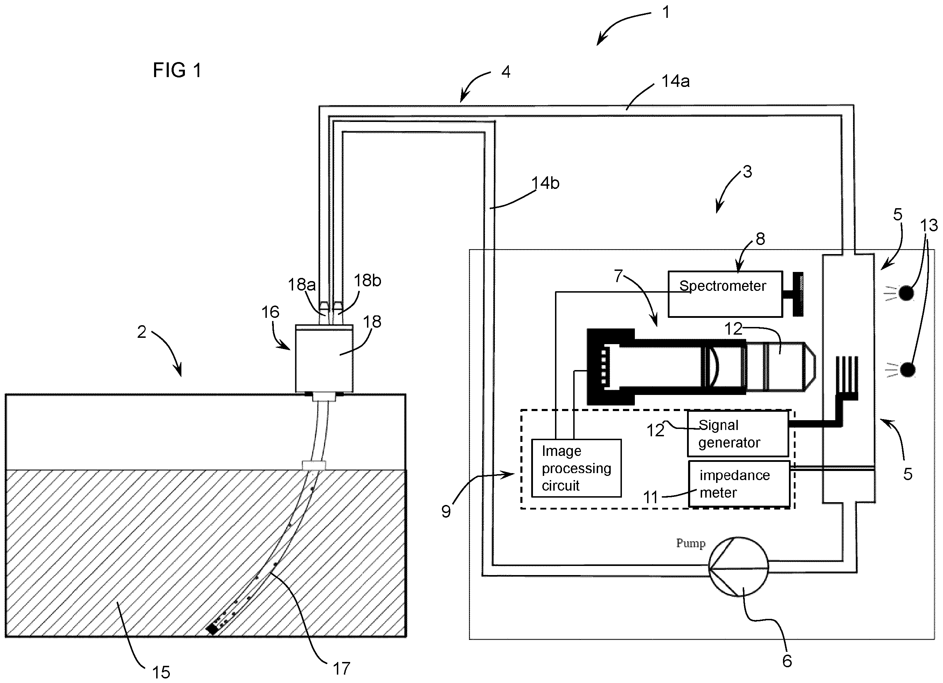

Figure 1 is a schematic representation of a cell culture monitoring system according to an embodiment of the invention;

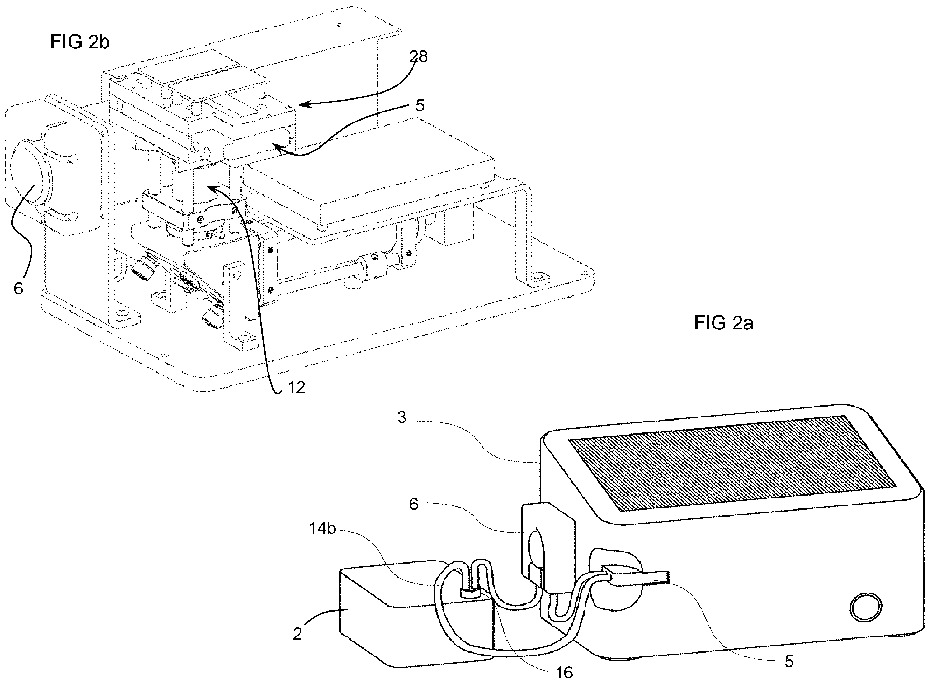

Figure 2a is a perspective view of a cell culture monitoring system according to an embodiment of the invention;
Figure 2b is a perspective view of a portion of the cell culture monitoring system of figure 2a with a cover removed and certain internal components removed;

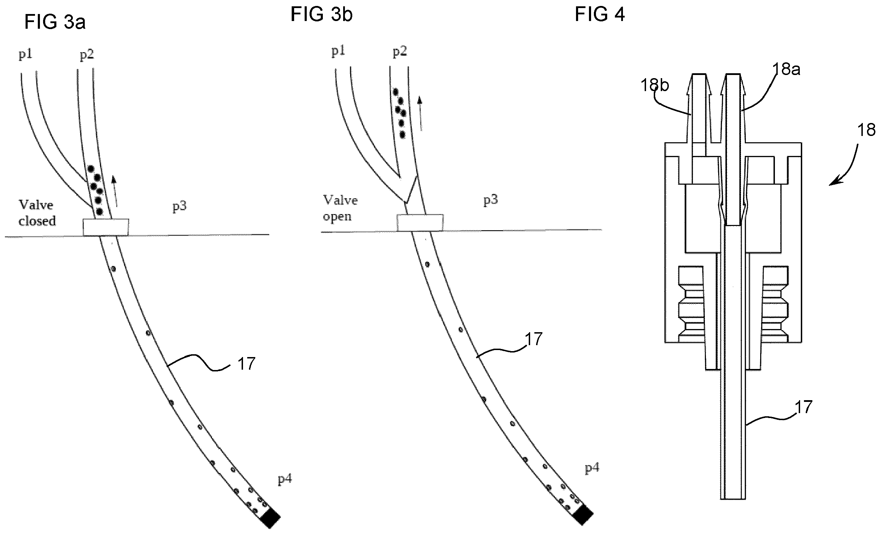

Figure 3a and 3b are schematic views of a tube inserted in a cell culture tank 2 of a cell culture monitoring system according to an embodiment of the invention;
Figure 4 is a cross-sectional view of a fluidic connector of the cell culture tank;
Figure 5a is a perspective view of a cartridge holder portion of a monitoring apparatus of a cell culture system according to an embodiment of the invention;
Figure 5b is a view similar to figure 5a with a cartridge of the cell culture monitoring system according to an embodiment of the invention, inserted in the holder;
Figure 5d is a perspective partial cross-sectional simplified view of the cartridge and holder of figure 5b;

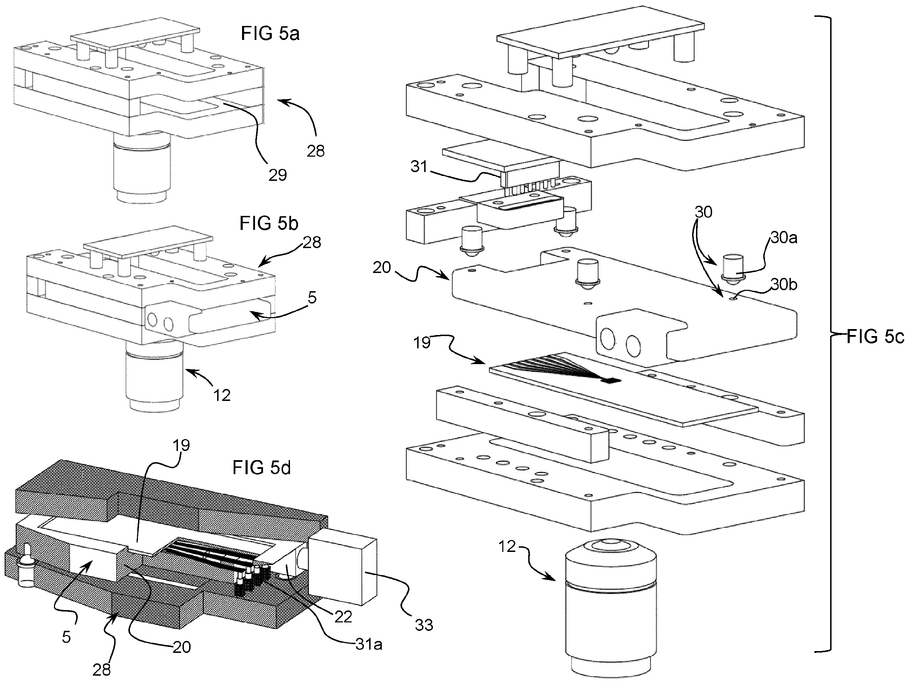

Figure 5c is an exploded view of the elements of figure 5b;

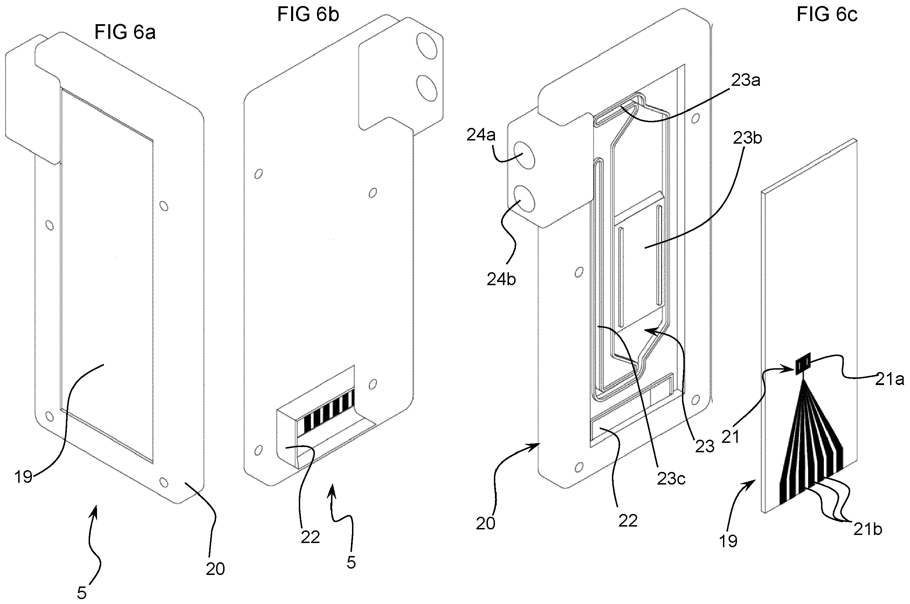

Figures 6a and 6b are perspective views of the cartridge according to an embodiment of the invention;
Figure 6c is an exploded perspective view of the cartridge according to an embodiment of the invention;

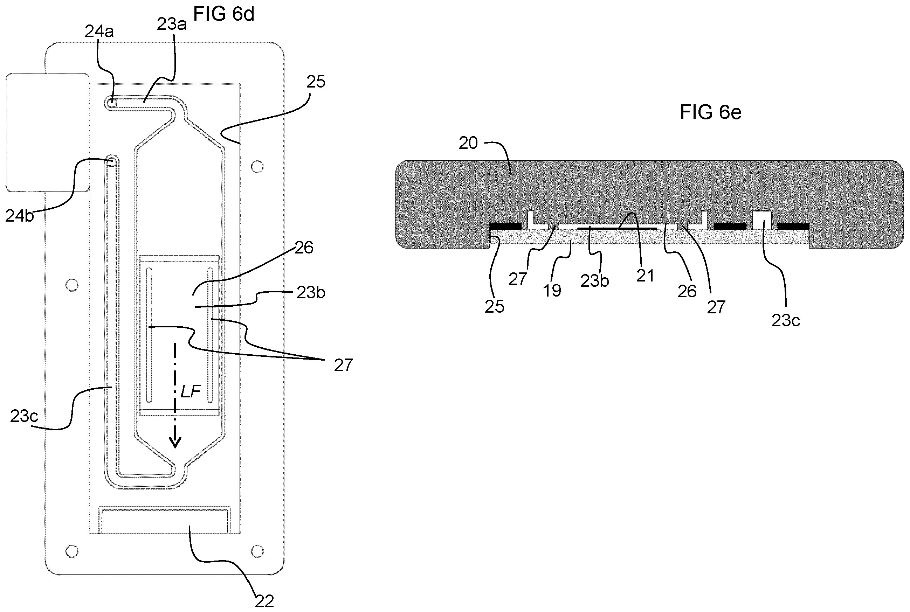

Figure 6d is a plan view of a base of the cartridge according to an embodiment of the invention;
Figure 6e is a cross-sectional view through the cartridge according to an embodiment of the invention;

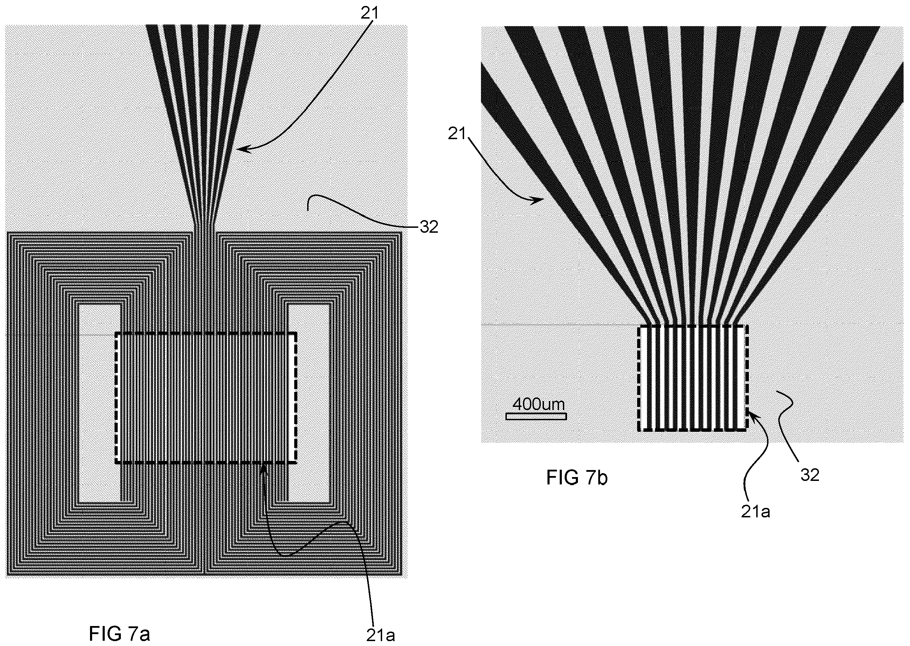

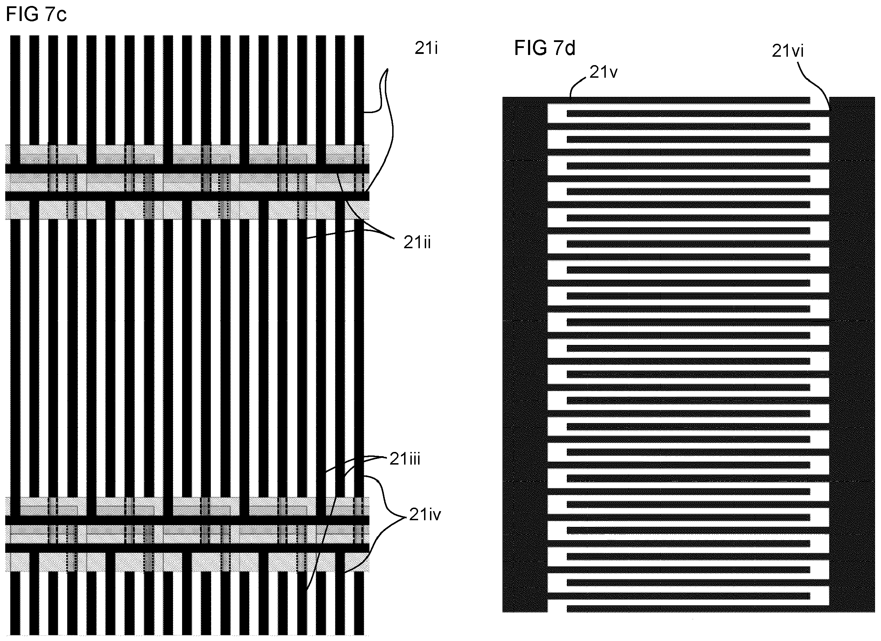

Figure 7 is a view of electrodes of a dielectrophoresis cartridge according to an embodiment of the invention;

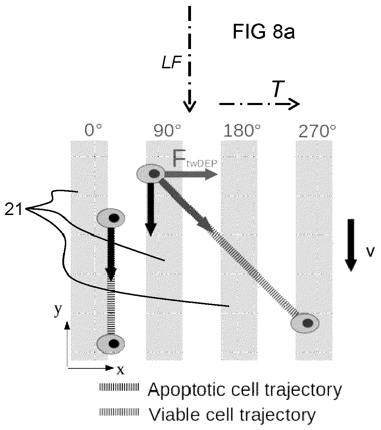

Figure 8a is a schematic simplified representation of the trajectory of cells relative to the electrodes when subject to dielectrophoresis, seen from a direction orthogonal to the plane of the electrodes;

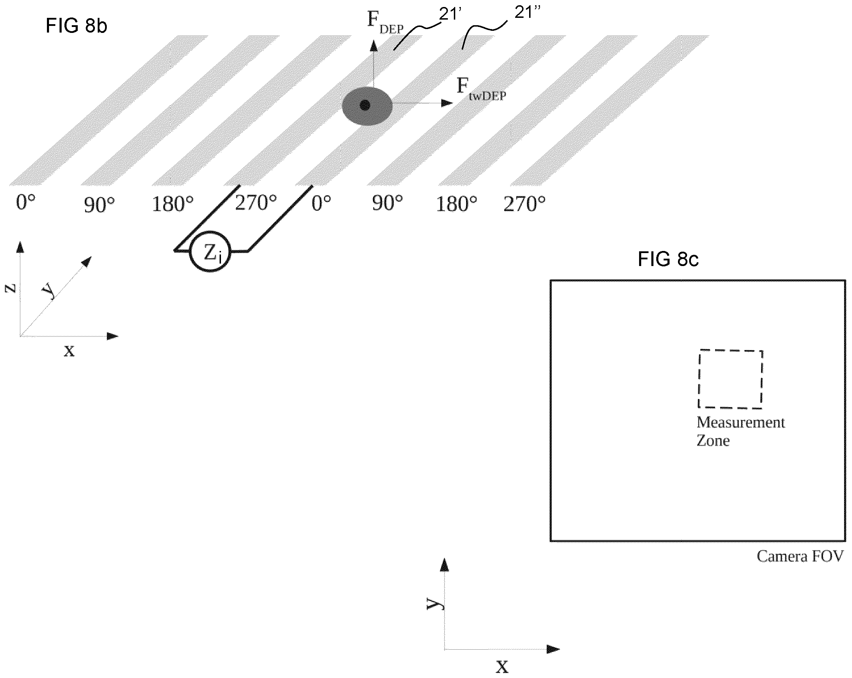

Figure 8b is a schematic simplified perspective representation illustrating the main directions of forces applied to cells relative to the plane of the electrodes due to dielectrophoresis and traveling wave dielectrophoresis;
Figure 8c is a schematic simplified representation of a field of view of a camera of an image capture system, seen from a direction orthogonal to the plane of the electrodes;

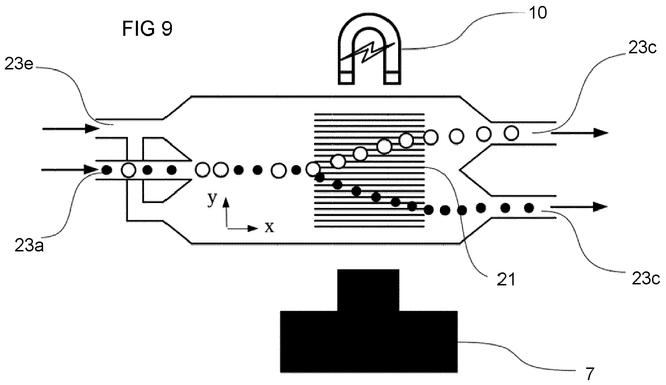

Figure 9 is a schematic representation of a dielectrophoresis cartridge according to a variant;

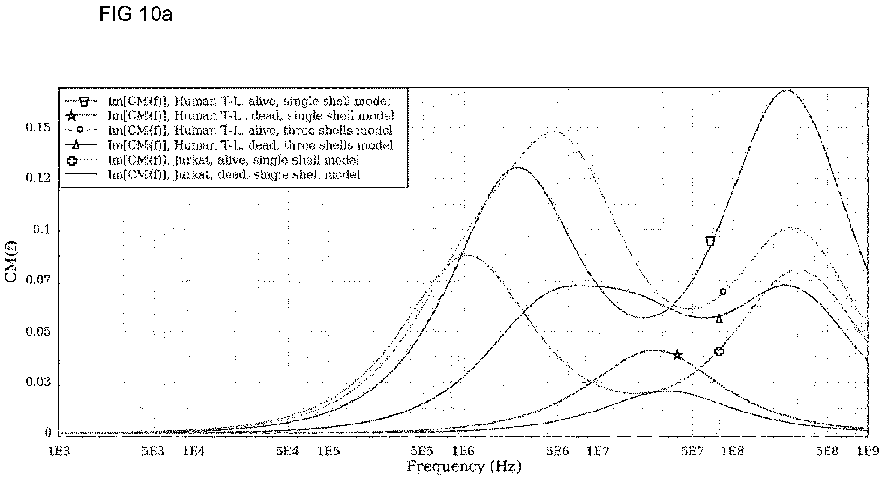

Figure 10a is representation of plots of the Imaginary part of the Clausius-Mossotti factor of the travelling wave dielectrophoresis force equation, versus applied frequency of the traveling wave for different cell models, the travelling wave dielectrophoresis force being generated parallel to the plane of the electrodes;

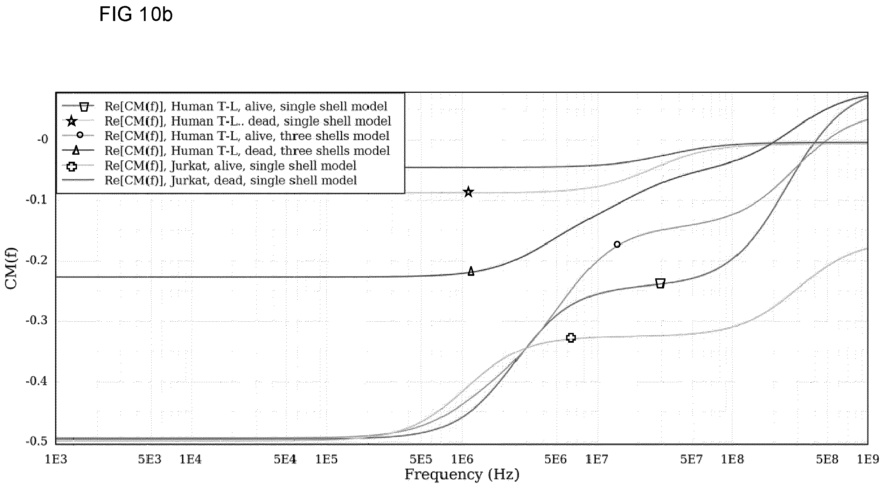

Figure 10b is representation of plots of the Real part of the Clausius-Mossotti factor of the dielectrophoresis force equation versus applied frequency for different cell models, the dielectrophoresis force being generated orthogonal to the plane of the electrodes.

Referring to the figures, a cell culture monitoring system 1 according to embodiments of the invention comprises a monitoring apparatus 3, a cell culture tank 2, and a fluid circulation system 4 for transporting a cell culture medium containing cells to be observed between the cell culture tank and the monitoring apparatus.

The monitoring apparatus 3 comprises an image capture system 7, a spectrometer 8, a computing unit 9, and a cartridge holder portion 28 for receiving a dielectrophoresis cartridge 5 of the fluid circulation system 4.

The fluid circulation system 4 comprises the dielectrophoresis cartridge 5 and conduits 14a, 14b interconnecting the dielectrophoresis cartridge 5 to the cell cartridge tank 2. The fluid circulation system 4 further comprises a pump 6 that may be mounted or formed part of the monitoring apparatus 3 (as illustrated) or that may in other variants be mounted on the cell cartridge tank and electrically connected to the monitoring apparatus for control of the pump. In a preferred embodiment, the pump is mounted on the monitoring apparatus and may advantageously be in a form of a peristaltic pump. At least a portion of the supply conduit 14a comprises a flexible section of tube mounted in the peristaltic pump for pumping of the cell culture medium in a sterile manner.

The supply conduit 14a and return conduit 14b connected to the dielectrophoresis cartridge 5 and cell culture tank 2 of the fluid circulation system advantageously forms a closed circuit enabling fluid of a cell culture medium 15 contained in the cell culture tank 2 to be circulated to the dielectrophoresis cartridge 5 and back to the cell culture tank in a closed circuit. In a variant, the fluid circulation system may further comprise an exit conduit coupled to a waste channel 23 for the removal of dead (i.e. apoptotic) cells separated from live cells, or for separating different cell pheonotypes, due to their different trajectories in the dielectrophoresis cartridge. The fluidic connector 18 may be connected to the cell culture tank via a luer lock type of connection as *per se* well known in the art of fluidic connections, or may be interconnected by other means. The fluidic connector 18 allows flexible tubes, in particular the tank supply and return tubes, to be coupled to the connector.

The supply conduit 14a may further comprise a perforated tube 17 immersed in the cell culture medium 15, and preferably that extends to the bottom of the cell culture tank. The perforations in the tube 17 may be arranged such that there are a larger number of perforations towards the bottom of the tank and a progressively decreasing number of perforations towards the top of the tank, such that the inlet resistance decreases towards the bottom of the tank. This ensures that the sucking pressure is substantially evenly distributed in order to ensure that cell culture medium throughout the height of the cell culture tank is drawn into the supply tube for a uniform sampling over the height. A weight at the bottom of the perforated tube and a float at the top of the tube may be provided to ensure all the holes are under liquid. Other tube holding and positioning means may however be provided. Moreover, the perforated tube may comprise various shapes, for instance a "corkscrew" shape to increase uniformity of horizontal sampling. The cell culture container may further comprise mixing system, for instance rotating blades or a magnetic bar stirrer (not shown) to homogenize the cell distribution in the culture medium.

A valve may be provided in the fluidic connector 18 allowing re-circulation of cell culture medium within the supply return conduits to circulate in a closed circuit without passing through the culture tank, or to change the valve setting such that new cell culture medium drawn from the cell culture tank is pumped into the supply conduit. The functioning of the valve may depend on the analysis to be performed, for instance if the supply and return conduits are connected together, multiple recirculation of the sample medium may be passed through the dielectrophoresis cartridge for measurement, for instance for increasing the sensitivity of measurement, or new cell culture medium may be pumped into the supply conduit and return to the cell culture tank for a single pass through the dielectrophoresis cartridge.

A valve may also be provided to switch the return conduit to a waste container (not shown) in certain instances where the sample being measured is discarded and is not returned to the cell culture medium.

The dielectrophoresis cartridge 5 according to an advantageous embodiment of the invention comprises a base 20 and an electrode support 19. The base 20 may advantageously be made of a polymer material which in certain embodiments may advantageously be a transparent polymer material such as ABS (Acrylnitril-Butadien-Styrol-Copolymer). The base may advantageously be molded, for instance injection molded, or made by additive manufacturing techniques (such as 3D printing).

The electrode support 19 may be made of a polymer material, but is preferably made of glass, and comprises conductive electrodes on the glass that may be made by various *per se* known deposition and patterning techniques, such as chemical vapor deposition, lithography, printing, and other known metallic layer deposition techniques. In advantageous embodiments, the electrode support 19 is a part separately formed from the base and assembled to the base, for instance by adhesive bonding, ultrasound bonding, or welding. However it is also possible by way of additive manufacturing techniques to form the base, support and electrodes as a single part.

The base 20 comprises a fluidic connector portion 24 comprising an inlet 24a and an outlet 24b, and a microfluidic circuit formed within the base having channels interconnecting the inlet 24a to the outlet 24b. The base further comprises an electrode connection window 22 that allows access to contact portions 21b of the electrodes 21.

The microfluidic circuit 23 comprises an inlet channel 23a connected to the inlet 24a, flowing into a measuring chamber 23b, a return channel 23c flowing out from the measuring chamber 23b to the outlet 24b. The measurement chamber 23b may advantageously comprise a raised floor 26 that defines a channel height between the base 20 and the electrode support 19. This ensures that a very well defined gap for the fluid flowing through the measuring chamber is provided under a measuring zone 21 a of the electrodes 21 positioned over the measuring chamber. The height in the measuring chamber 23 between electrode and floor 26 is preferably in the range of 10 to 200$\mu$m.

Cells in the liquid flowing through the measuring chamber 23b are subject to a travelling wave dielectrophoresis force $F_{twDEP}$ depending on the state of the cells. Use of dielectrophoresis electrodes to determine the state of a cell is per se a well-known concept. In conventional systems, typically cells within a liquid medium are displaced by dielectrophoresis, such displacement being indicative of the state of the cells. Dead cells are displaced less or are not subject to a travelling wave dielectrophoresis force whereby living cells are subject to the dielectrophoresis force and translate across the electrodes. When dephased signals are applied to juxtaposed electrodes separated by a gap, a force parallel to the plane X-Y in which the electrodes are arranged, known as travelling wave dielectrophoresis force $F_{twDEP}$ , is exerted on cells depending on their state. The travelling wave dielectrophoresis force is characterized by the following per se known equation:

$$\vec{F}_{twDEP} = -\frac{1}{\lambda} 4\pi^2 R^3 \epsilon_m \Im[f_{CM}] \vec{E}^2$$

The imaginary part of the Clausius-Mossotti (CM) factor [fcm] in the above equation however varies depending on the cell properties and the applied frequency of the dephased signals on the electrodes. Figure 10a shows plots of the travelling wave dielectrophoresis forces for different cells models as a function of the applied frequency of the dephased signals on the electrodes.

As illustrated in figure 8b, coplanar electrodes also create a non-uniform electric field in a direction orthogonal to the plane of the electrodes, which creates a dielectrophoresis force $F_{DEP}$ in a direction Z orthogonal to the electrode plane X-Y and orthogonal to the direction of the travelling wave dielectrophoresis force that translates cells across the electrodes. The orthogonal dielectrophoresis force $F_{DEP}$ depends on the real part of the CM factor.

$$\vec{F}_{DEP} = 2\pi R^3 \epsilon_m \Re[f_{CM}] \nabla \vec{E}^2$$

Figure 10b shows plots of the real part of the CM factor. Forces acting on cells depend on cell properties. By tracking their displacements, both horizontal (X-Y plane) and vertical (orthogonal direction Z), cell populations can be discriminated between each other, and the state of the cells may also be discriminated between live, and dead cells, possibly also between healthy and unhealthy live cells. The tracking of the cell displacements in both the coplanar and orthogonal directions, relative to the plane X-Y of the electrodes 21, is done by the image capture system 7.

The image capture system 7 comprises a microscope 7 that captures the horizontal position and displacement of the cells in a plane parallel to the plane X-Y of the electrodes 21.

According to an aspect of the invention, the image capture system 7 is configured to capture the position and displacement of the cells in the orthogonal direction Z. An important advantage of this feature is that the displacement of cells subject to a dielectrophoresis force in the orthogonal direction may be measured in a manner to discriminate between cell types and/or cell states before the measurement of the displacement in the plane parallel to the plane X-Y of the electrode allows discrimination between cell types and/or cell states. A more rapid measurement can thus be performed. Also, this measurement can be used in conjunction with the measurement in the plane parallel to the plane X-Y of the electrode to improve the accuracy and reliability of the measurement of the properties of cell types and/or cell states.

In an advantageous embodiment, scanning through different electrode signal frequencies, or application of a plurality of discrete different electrode signal frequencies, during a measurement with the image capture system, allows accurate measurement of the properties over a range of frequencies to improve the identification both of the type of cell observed and the state of that cell. Figures 10a and 10b illustrate that various cell types and various cell states lead to different CM / frequency plots that can be used for the discrimination of cell types and states.

The measurement of the cell displacement in the plane parallel to the plane *X-Y* of the electrode can be performed simultaneously, sequentially, or independently of the measurement of cell displacement in the orthogonal direction *Z.*

In an embodiment, the microscope 7 may be provided with a small depth of field and an electrically adjustable lens configured to view through the culture sample and capture the position of the cells in the orthogonal direction *Z.* The electrically adjustable lens may be configured to capture multiple images in slices taken in the *Z* direction that may be processed to determine the position and displacement of cells in the orthogonal *Z* direction. Fast Z-slicing capture and reconstruction permits to compute the cell sample volume and gives more information on the sample, allowing to detect and characterize the objects with better accuracy. The shape of a cell can be determined precisely when the microscope lens is adjusted to view the cell in focus. The focus can further be adjusted for compensating any mechanical error in the orthogonal *Z* axis when inserting the dielectrophoresis cartridge 5 into the monitoring apparatus 3. Positioning errors in an *X-Y* plane can be compensated by selecting a region of interest in the camera sensor. The field of view of the camera being larger than the zone of measurement.

The system can thus measure the levitation of cells relative to the plane of the electrodes 21 by analyzing the slice at which the cells are in focus.

The electrodes 21 may advantageously be made of a conductive transparent material, for instance a thin indium tin oxide (ITO) layer, such that the microscope can view the inside of the measuring chamber 23b through the transparent electrode support 19 and capture images of the cells at any position overhead the electrodes.

Within the scope of the invention, instead of using an optical microscope, a light sheet microscope or a confocal microscope could be used in the image capture system, such microscope systems being *per se* known and do not need to be described herein.

As illustrated in figures 7a and 7b, according to an aspect of the invention, except for a measurement zone 21a, the electrodes 21 are insulated with respect to an inside of the measuring chamber 23b in contact with the liquid medium by an insulator layer, for instance a layer of silicon dioxide $SiO_2$. The measurement zone 21a of the electrodes is not insulated to avoid a voltage drop and signal distortion and thus generate an optimal electric field. The contacts 21b located outside the measurement chamber are also not insulated.

The insulation of the electrodes around the measurement zone 21a also allows to increase the distance between the contacts 21b and the measurement zone 21a aligned with the image capture system without the adverse effects of the section of electrodes interconnecting the measurement zone to the contacts on the dielectrophoresis signal.

As schematically illustrated in figure 8b, the impedance Zi of a cell can advantageously be measured with two parallel impedance measurement electrodes 21', 21". The impedance measurement electrodes 21', 21" may be two of the electrodes used for travelling wave dielectrophoresis, or may be independent electrodes used only for the impedance measurement. The cell position can be detected with the image capture system and placed between the impedance measurement electrodes 21', 21" by controlling flow of the liquid in the measurement chamber by controlled operation of the pump 6, and/or by application of the travelling wave dielectrophoresis force $F_{twDEP}$, while detecting the position with the image capture system. This can be very useful to perform measurement of a selected single cell sample.

Referring to figures 7a and 6c, a large area travelling wave dielectrophoresis twDEP zone can be achieved with spiral electrodes according to an embodiment. As previously mentioned, for avoiding signal attenuation or distortion, an insulation layer may be added on the top everywhere except in the measurement zone 21a and the contacts 21b.

According to an embodiment of the invention, as illustrated in Figure 7b, the plurality of electrodes 21 may also be simply arranged in a juxtaposed parallel manner in the measurement zone 21a, connected to individual non-spiraling tracks.

Referring to figure 7c, according to another embodiment, the electrodes 21 has four electrodes 21i, 21ii, 21iii, 21iv for generating four different signals in an interdigitated manner, the four electrodes being deposited on insulatingly separated layers. The four layers may for instance be built as a stack of a first conductive layer, a first insulation layer, a second conductive layer and then a second insulation layer, whereby two of the electrodes 21i, 21iii are on the first conductive layer but spaced apart and the other two electrodes 21ii, 21iv are on the second conductive layer but spaced apart.

Referring to figure 7d, according to another embodiment, the levitation of cells in the orthogonal direction *Z* can be measured with two signals generated by two electrodes 21v, 21vi. The largest levitation force occurs when the two signals are dephased by 180°. In this embodiment, discrimination of cell types and cell states may be performed only by measuring the position and displacement of the cells in the orthogonal direction *Z* with the image capture system.

During the measurement by the image capture system of the position and displacement of the cells due to travelling wave dielectrophoresis, the liquid in the measuring chamber may be static or substantially static, or may be subject to a fluid flow such that they exhibit a component in the liquid flow direction LF through the measuring chamber, from the inlet towards the outlet, as well as a translational movement $T$ laterally due to the travelling wave dielectrophoresis force $F_{twDEP}$, as illustrated in figure 8a. The direction of movement of the cells is captured by the image capture system 7 and analysed by the computing unit 9. An advantage of the simultaneous fluid flow and translational movement by dielectrophoresis is that the vectorial component allows for very accurate and easy measurement of the state of the cells, to discriminate between healthy and dead cells as well as the state of the cells affecting the dielectrophoresis force. This measurement may be made in conjunction with the measurement of the displacement in the orthogonal direction $Z$ for increasing the accuracy and reliability of the discrimination between cell types as well as between different states of each of the cells.

Electroporation is a technique used to improve cell transfer. According to another aspect of the invention the dielectrophoresis zone in the measuring chamber may be used for this purpose. The generated electric field (amplitude dependent) increases the permeability of cell membranes and promotes the integration of vectors (e.g. viruses) into cells. Being able to move microorganisms of different sizes (e.g. viruses and cells) at different speeds through dielectrophoresis would amplify the integrations of viruses since collisions would occur. The traveling wave dielectrophoresis forces generated in the measurement chamber can therefore be used to move the microorganisms laterally in both directions and create multiple collisions.

In another embodiment, as illustrated schematically in figure 9, it is possible to have two outlet channels, a first one corresponding to the return channel 23c and another one corresponding to a waste channel 23d in which non-viable cells are removed from the fluid stream, the viable cells returning to the cell culture medium.

The dielectrophoresis cartridge 5 allowing continuous or semi continuous analysis of cell viability, in combination with the closed circuit connections from the cell culture tank to back to the cell culture tank, using a peristaltic pump or shuttle pump (or other pump type that does not have actuators that contact the liquid medium), ensures on the one hand a sterile liquid circuit while at the same time allowing economical automated analysis of the state of cells in the culture medium. The dielectrophoresis cartridge and cell culture tank are moreover sterilely separated from the monitoring apparatus 3 and they can be economically and easily disposed of while reusing the monitoring apparatus without requirement for special treatment.

The dielectrophoresis cartridge 5 may be coupled to supple tubes forming the supply and return conduits 40a, 40b and removably inserted into a slot of a cartridge holder portion 28 of the monitoring apparatus 3. While in position within the cartridge holder portion 28, the dielectrophoresis cartridge 5 is positioned such that the image capture system 7 and spectrometer 8 are positioned over the measuring chamber 23b, able to capture the movement of cells flowing in the measuring chamber and detect properties of the fluid. The cartridge is provided with a transparent window formed at least over the measuring chamber in the measuring chamber. The transparent window may be formed by the electrode support 19, for instance in a form of a layer of glass, but may also be viewable through a transparent polymer window of the base 20.

In certain variants, light sources 13 may be positioned on an opposite side of the cartridge holder portion with respect to the image capture system 7.

The spectrometer 8 may be used to capture properties of the fluid whereas the image capture system may be used to detect the cells within the liquid to capture the movement of the cells through the measuring chamber.

The computing unit 9 connected to the spectrometer 8 and image capture system 7 is configured with algorithms to count cells and to analyze the trajectory of the cells and determine therefrom the viability of the cells. The computing unit comprises a signal generator 12 connected to the electrodes 21 for generating the travelling wave dielectrophoresis signal. An impedance meter 11 may further be connected to the computing unit 9, the impedance meter measuring the electrical impedance of liquid flowing through the measuring chamber. The impedance meter Zi may comprise two spaced apart electrodes 21', 21" immersed in the culture medium flowing through the cartridge 5.

As best seen in figure 7a, according to an advantageous embodiment, the multiple electrodes may form a pair of mirror image spirals. In the illustrated embodiment, there are eight electrodes, four on each spiral. The spirals in the illustrated embodiment have a substantially rectangular form, but could have oval or rounded forms. In advantageous embodiments, there may be less electrodes, for instance six or four electrodes.

In an embodiment (not shown), there may however be only a single spiral of the plurality of electrodes.

This spiral shaped measurement portion of the electrodes advantageously allows to reduce the number of electrodes while providing a sufficiently large width application of the travelling wave dielectrophoresis signal, causing easily measurable translation of viable cells.

Reducing the number of electrodes advantageously allows a reduction number of electrodes to be contacted, the contact portions 21b extending and spreading outwardly and increasing in width to provide sufficient contact surface areas for complementary terminals 31a of an electrical connector 31 in the cartridge holder portion 28 of the monitoring apparatus. As best seen in figures 5d and 5c, the connector 31 comprises spring mounted contacts that elastically press against the metallized pads of the electrode contact portions 21b when the dielectrophoresis cartridge 5 is fully plugged into the cartridge holder portion 28.

The cartridge holder portion 28 comprises a cartridge holder slot 29 within which the dielectrophoresis cartridge may be inserted fully into the measurement position, whereby locating elements 30, for instance in a form of protuberances 30a received in corresponding recesses 30b in the base 20 of the dielectrophoresis cartridge, to hold and locate the dielectrophoresis cartridge within the cartridge holder slot 29. The locating elements 30b may be spring mounted in the cartridge holder portion 28, or may be rigid whereby the elastic compliance is provided by the material of the dielectrophoresis cartridge 5, and optionally by providing the dielectrophoresis cartridge with elastic guides and recesses that engage the protuberances on the cartridge holder portion 28.

The monitoring apparatus may be provided with a manually or electrically actuated ejector 33 comprising a pusher mechanism (only schematically represented) to eject or assist ejection of the cartridge out of the cartridge holder slot 29.

The image capture system 7 may comprise an optical microscope 12 coupled to a digital image capture system that allows digital processing of the optical images. In variants it is however possible to employ other image capture systems such as:

- phase contrast imaging using a phase contrast microscope as imaging system to increase the contrast of the image and improve the quality of cell recognition.
- a confocal microscope as imaging system to increase the resolution of the image, whereby confocal imaging allows to reconstruct a 3D model of cells that improve the quality of cell characterization.
- Light sheet microscopy could be used for creating 3D images of the channel inside. It would provide more information about the cell morphology.

In the measuring chamber 23b, lateral guides 27 may be provided either lateral side of the measurement chamber portion in order to determine the precise height of the measuring chamber, i.e. the gap between the electrode support 19 and the floor of the measuring chamber.

The electrode support 19 may be mounted within a recess 25 of the base 20, providing protection for the electrode support 19.

The dielectrophoresis cartridge 5 can thus be easily plugged into the cartridge holder slot 29 and firmly and accurately located within the cartridge holder slot while at the same time establishing contact by the spring contacts 31a of the connector 31 that press against the electrode contact portion 21b through the electrode connection window 22 of the base 20.

The dielectrophoresis cartridge may thus be connected to the supply and return conduits to the culture tank which can be separately prepared and then easily coupled to the monitoring apparatus for a semi-continuous or continuous analysis of cells during a culture period for instance during a two week period during growth of the cells in the culture medium.

The closed circuit configuration and sterile separation of the fluid circulation system from the the monitoring apparatus, allowing automated analysis of the cells by the image capture system connected to the computing unit, without requiring manual intervention, allows for a particularly safe, sterile and economical growth of cells in a culture medium.

One of the main applications of the present invention is to monitor a cell culture in an aseptic way during an expansion phase (e.g. ~ 2 weeks). The invention provides a sterile single use disposable kit which may be connected to a monitoring device, the disposable kit thrown away after first use. Using a disposable kit that is connected to the monitoring apparatus in a closed loop, allows the system to perform continuous or semi-continuous analyses of the cell culture during the full time of culture. The measured data may be made available through a communications network to follow remotely the state of the cell culture in real time. Other phases than the expansion phase may also be interesting to monitor, for instance for bioproduction, these phases for example including a Log Phase, a Stationary Phase, and a Death Phase. Dielectrophoresis can detect cells in early apoptotic state. Therefore the transition to death phase can be anticipated.

Operation of the system may comprise the following aspects. A sample is extracted from the cell culture tank and flows through the dielectrophoresis cartridge. The image capture system with a magnification records the cells passing through the measuring (observation) zone observed through a transparent window of the cartridge through the base or alternatively through the electrode support. In the observation zone, traveling-wave dielectrophoresis is may be used to manipulate the cells. Different cell populations can be discriminated and also sorted.

Optical and impedance spectroscopy of the medium will allow monitoring of further parameters such as metabolites content. The data generated by these measurements may be analyzed to provide information about the cell culture status. For instance Raman spectroscopy may be used, whereby the electrode support may comprises functional coatings to enhance detection, e.g. using surface-enhanced Raman scattering (SERS) measurement techniques. The functional coatings on the electrode support may in particular include coatings configured to detect metabolites such as glucose, lactose and other cell metabolites.

Cell density may be measured with the image capture system and subsequent image analysis in the computing unit. The volume which corresponds to the observed zone is known. Two dimensions (x and y) can be calculated with the projection model of the optical microscope. The measurement chamber height is known from the mechanical design and counting may thus be done automatically with image recognition algorithms.

Cell viability may be measured with traveling wave dielectrophoresis across electrodes and/or dielectrophoresis in the orthogonal direction, by analyzing the trajectories of the cells with the image capture system. Depending on the displacement of the cell (trajectory in the X-Y direction and/or displacement in the Z direction), the viability of each cell can be assessed. By correlating this with image analysis, a precise viability percentage of each cell type can be determined.

Cells phenotypes can be discriminated based on their displacements generated by dielectrophoretic forces. The size, membrane and dielectric properties of the cells play a role in the dielectrophoretic force. The optical properties such as shape, absorption, nuclear size, granulosity, membrane thickness, may also be extracted from image processing algorithms executed in a signal processing unit that may be an embedded computer or a distributed external system (cloud network) and increase the confidence for cell discrimination. Different cell types can be clustered along the electrodes by applying different signal patterns. Different signal configurations (phase, amplitude, time) may be run and with the feedback of the image capture system and/or with a method of reinforcement learning, the same cells types may be regrouped together. A similar methodology can also be used for sorting.

The ability of discriminating the cells allows to observe if certain populations of cells grow faster than others or grow to the detriment of the needed cells. The culture condition (nutriments, temperature, diluted gazes, pH, metabolite content ...) for the needed cells can be improved with the data collected and their analysis. Unwanted cells and other particles (bacteria, viruses ...) can also be sorted during the monitoring.

The data provided by the spectrometer and impedance meter coupled with other data provided by the system (viability, cell populations...) and data from other devices stored in a communications network may be used in addition to provide information on the state of the culture. Patterns can be found with algorithms (e.g. machine learning) and prediction can be done on current cultures. The data of a plurality of monitoring recordings can be collected and analyzed in the cloud computing network or in the distributed devices.

*List of references used*

cell culture monitoring system 1

**monitoring apparatus 3**

**image capture system 7**

microscope 12
light 13

**spectrometer 8**
**Computing unit 9**

signal generator 10
impedance meter 11

**cartridge holder portion 28**

cartridge holder slot 29
locating elements 30
spring protuberances 30a
connector 31
electrical terminals 31a
ejector 33

**fluid circulation system 4**

dielectrophoresis cartridge 5

base 20

    electrode connection window 22
    microfluidic circuit 23

        inlet channel 23a
        measuring chamber 23b

          raised floor 26
          lateral guides 27

        return channel 23c
        waste channel 23d
        supplementary inlet channel 23e
        outlet (return) 24b
        inlet (supply) 24a

    locating recess 30b
    support mounting recess 25

electrode support 19

    electrodes 21

        measurement zone 21a
        contacts 21b

    insulator layer 32

supply conduit 14a
exit / return conduit 14b
tank supply /return fluidic connections 16

    perforated tube 17
fluidic connector 18

    supply connection 18a
    return connection 18b

pump 6

**cell culture tank 2**
**cell culture medium 15**

**Claims**

1. A cell culture monitoring system (1) comprising a monitoring apparatus (3) for coupling to a culture tank (2) containing a cell culture medium (15) therein, and a fluid circulation system (4) for fluidic coupling to the cell culture tank (2) the fluid circulation system comprising a dielectrophoresis cartridge (5) for connection to the cell culture tank (2) via supply and return conduits (14a), (14b), the dielectrophoresis cartridge comprising a base (20) and an electrode support (19) having electrodes (21) arranged in an electrode plane **X-Y** in or on the electrode support (19), the electrodes configured for travelling wave dielectrophoresis and comprising a measurement zone (21a) arranged above a measuring chamber (23b) formed between the electrode support (19) and a floor (26) of the base (20) forming a measuring chamber therebetween, the monitoring apparatus (3) comprising a signal generator (12) connected to the electrodes, a computing unit (9), an image capture system (7) connected to the computing unit (9), and a cartridge holder portion (28) for receiving said dielectrophoresis cartridge (5) such that the image capture system (7) may detect cells in said measuring chamber (23b), wherein the image capture system is configured to capture the displacement of cells in the cell culture medium within the measuring chamber in an orthogonal direction *Z* to said electrode plane *X-Y* to enable measurement of a cell type and/or cell state.

2. The system according to any preceding claim, wherein the image capture system and computing unit is configured to capture multiple images in slices taken in the orthogonal direction *Z* that are processed to determine the position and displacement of cells in the orthogonal direction *Z*.

3. The system according to the preceding claim, wherein the image capture system comprises a microscope (7) with a depth of field less than a height of the measuring chamber and an electrically adjustable lens for adjustment of the focus to capture slices of image at different heights.

4. The system according to any preceding claim, wherein cells in the cell culture liquid medium within the measuring chamber are subject to a travelling wave dielectrophoresis force in a plane parallel to the electrode plane *X-Y* and wherein the image capture system is configured to capture the displacement of cells in the cell culture medium within the measuring chamber in said plane parallel to the electrode plane *X-Y* to enable measurement of a cell type and/or cell state in conjunction with the measurement based on displacement of the cell in the orthogonal direction *Z*.

5. The system according to the preceding claim, wherein the signal generator is configured to scan through different electrode signal frequencies, or apply a plurality of discrete different electrode signal frequencies, during a measurement or over a succession of measurements, and the image capture system and computing unit are configured to measure displacements of a cell for different electrode signal frequencies.

6. The system according to any preceding claim, wherein the electrode support (19) is made of a transparent polymer or glass, and the electrodes are made of a conductive transparent material, for instance a thin indium tin oxide (ITO) layer.

7. The system according to any preceding claim, wherein the electrodes (21) are insulated with respect to an inside of the measuring chamber by an insulator layer, except for a measurement zone (21a) and contacts (21b).

8. The system according to any preceding claim, wherein the cartridge comprises at least two impedance measurement electrodes (21', 21") configured for measuring the impedance (Zi) of a cell.

9. The system according to any preceding claim, wherein the electrodes (21) are formed on an inner surface of the electrode support (19) bounding the measuring chamber (23b) and having contact portions (21b) extending to an electrode connection window (22) formed in the base (20) for plugging contact to complementary spring contacts (31a) of the monitoring apparatus, the electrode connection window (22) being sealingly separated from the measuring chamber (23b).

10. The system according to any preceding claim, wherein the measuring chamber (23b) comprises a raised floor (26) and lateral guides (27) defining a gap between the floor (26) and electrode support (19).

11. The system according to any preceding claim, wherein said electrodes (21) comprise one or more spiraling conductive tracks, for instance in two sets in mirror image symmetry, a portion of which forms the measurement zone (21a).

12. The system according to any preceding claim 1-10, wherein the electrodes comprise at least two interdigitated electrodes (21i, 21ii, 21iii, 21iv, 21v, 21vi).

13. The system according to any preceding claim, wherein the cartridge holder portion (28) of the monitoring apparatus (3) comprises a cartridge holder slot configured for slidable insertion of the dielectrophoresis cartridge therein.

14. The system according to any preceding claim, wherein the cartridge holder portion (28) comprises locating elements (30) engaging in complementary locating elements in the dielectrophoresis cartridge for positioning and securing the dielectrophoresis cartridge in a measurement position.

15. The system according to any preceding claim, wherein the gap in the measuring chamber (23) between electrode and floor (26) is in the range of 10 to 500$\mu$m.

FIG 1

Spectrometer

Signal generator

impedance meter

Image processing circuit

Pump

FIG 2a

FIG 2b

FIG 3a

p1  p2

Valve
closed          p3

17

p4

FIG 3b

p1  p2

Valve
open            p3

17

p4

FIG 4

18b          18a

18

17

EP 4 089 394 A1

EP 4 089 394 A1

FIG 5a

FIG 5b

FIG 5c

FIG 5d

EP 4 089 394 A1

FIG 6c

21a
21b
21
23
19
23a
23b
23c
22
24a
24b
20

FIG 6b

5
22
20

FIG 6a

5
19

16

FIG 6d

FIG 6e

EP 4 089 394 A1

EP 4 089 394 A1

FIG 7a

400um

FIG 7b

FIG 7d

FIG 7c

FIG 8a

Apoptotic cell trajectory
Viable cell trajectory

EP 4 089 394 A1

FIG 8b

$F_{DEP}$ 21' 21''

$F_{twDEP}$

0° 90° 180° 270° 0° 90° 180° 270°

$Z_i$

z

y

x

FIG 8c

Measurement Zone

Camera FOV

y

x

FIG 9

23e

10

23c

23a

y

x

21

23c

7

FIG 10a

FIG 10b

EP 4 089 394 A1

Europäisches
Patentamt

European
Patent Office

Office européen
des brevets

# EUROPEAN SEARCH REPORT

Application Number

EP 21 17 3427

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2002/036142 A1 (GASCOYNE PETER [US] ET AL) 28 March 2002 (2002-03-28) * paragraphs [0018], [0088], [0101], [0103], [0143], [0159], [0166], [0168], [0175]; figures 5,9,12 * | 1-15 | INV. G01N15/14 G01N15/00 G01N15/10 B01L3/00 |
| A | US 2014/367260 A1 (DICKERSON SAMUEL J [US] ET AL) 18 December 2014 (2014-12-18) * paragraphs [0028], [0032], [0067], [0091]; figure 13 * | 1-15 | |
| A | US 2005/266478 A1 (HUANG MINGXIAN [US] ET AL) 1 December 2005 (2005-12-01) * paragraphs [0146], [0215], [0217], [0319] * | 1-15 | |
| A | US 5 993 631 A (PARTON ADRIAN [GB] ET AL) 30 November 1999 (1999-11-30) * column 2, line 8 - line 31 * * column 10, line 48 - column 11, line 4 * | 1-15 | |

TECHNICAL FIELDS
SEARCHED (IPC)

G01N
B01L

The present search report has been drawn up for all claims

| Place of search | Date of completion of the search | Examiner |
|---|---|---|
| The Hague | 13 October 2021 | Eidmann, Gunnar |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 17 3427

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2021

| Patent document cited in search report | | Publication date | Patent family member(s) | | Publication date |
|---|---|---|---|---|---|
| US 2002036142 | A1 | 28-03-2002 | AT | 304174 T | 15-09-2005 |
| | | | AU | 6989601 A | 24-12-2001 |
| | | | CA | 2413194 A1 | 20-12-2001 |
| | | | EP | 1328803 A2 | 23-07-2003 |
| | | | JP | 2004532968 A | 28-10-2004 |
| | | | US | 2002036142 A1 | 28-03-2002 |
| | | | WO | 0196025 A2 | 20-12-2001 |
| US 2014367260 | A1 | 18-12-2014 | US | 2014367260 A1 | 18-12-2014 |
| | | | WO | 2014200774 A2 | 18-12-2014 |
| US 2005266478 | A1 | 01-12-2005 | AU | 2003231300 A1 | 17-11-2003 |
| | | | CA | 2485099 A1 | 13-11-2003 |
| | | | EP | 1501924 A2 | 02-02-2005 |
| | | | US | 2005266478 A1 | 01-12-2005 |
| | | | WO | 03093494 A2 | 13-11-2003 |
| US 5993631 | A | 30-11-1999 | AT | 165255 T | 15-05-1998 |
| | | | AT | 204211 T | 15-09-2001 |
| | | | DE | 69409788 T2 | 12-11-1998 |
| | | | DE | 69428000 T2 | 04-04-2002 |
| | | | DK | 0680380 T3 | 22-02-1999 |
| | | | DK | 0815942 T3 | 12-11-2001 |
| | | | EP | 0680380 A1 | 08-11-1995 |
| | | | EP | 0815942 A1 | 07-01-1998 |
| | | | EP | 1092477 A1 | 18-04-2001 |
| | | | JP | H08506179 A | 02-07-1996 |
| | | | US | 5653859 A | 05-08-1997 |
| | | | US | 5993631 A | 30-11-1999 |
| | | | WO | 9416821 A1 | 04-08-1994 |

EPO FORM P0459

For more details about this annex : see Official Journal of the European Patent Office, No. 12/82